Europäisches Patentamt

(19) European Patent Office

Office européen des brevets

(11) Veröffentlichungsnummer: **0 097 921**
**B1**

# (12) EUROPÄISCHE PATENTSCHRIFT

(45) Veröffentlichungstag der Patentschrift:
06.08.86

(21) Anmeldenummer: 83106151.0

(22) Anmeldetag: 23.06.83

(51) Int. Cl.⁴: **B 32 B 5/24,** C 08 L 61/06,
C 08 J 5/24, C 08 J 3/02

(54) Verfahren zur Herstellung von Verbundmaterialien und diese Materialien.

(30) Priorität: 26.06.82 DE 3223912

(43) Veröffentlichungstag der Anmeldung:
11.01.84 Patentblatt 84/2

(45) Bekanntmachung des Hinweises auf die Patenterteilung:
06.08.86 Patentblatt 86/32

(84) Benannte Vertragsstaaten:
BE DE FR GB IT

(56) Entgegenhaltungen:
GB - A - 1 412 903
US - A - 2 219 447
US - A - 2 902 458
US - A - 3 843 576
US - A - 4 136 228
US - A - 4 255 485

(73) Patentinhaber: HOECHST AKTIENGESELLSCHAFT,
Postfach 80 03 20, D-6230 Frankfurt am Main 80 (DE)

(72) Erfinder: Schönrogge, Burkhard, Martensallee 16,
D-2000 Hamburg 70 (DE)

**Beschreibung**

Für den Innenausbau von beweglichen Transportmitteln, z.B. Flugzeugen, werden bisher Sandwichbauteile aus einem wabenförmigen Kern mit Phenolharzimprägnierung und Deckschichten aus meist zweilagigem Epoxidharz enthaltenden Glas-Hartgewebe zur Herstellung der Trennwände, Seitenverkleidungen mit Fensteröffnungen, Deckenverkleidung, Deckel für Garderobenfächer, Böden usw. herangezogen. Die Eigenschaften der dafür eingesetzten Werkstoffe müssen den in bestimmten Werkstoff-Leistungsblättern aufgeführten Kenndaten entsprechen, z.B. den von der Normenstelle Luftfahrt im DIN (5000 Köln 1) geforderten.

Bei vielen Flugzeugunglücken, bei denen z.B. das Wrack Feuer fing, kamen die Passagiere teilweise durch Vergiftung durch toxische Verbrennungsprodukte, durch Ersticken und insbesondere – bedingt durch extreme Rauchentwicklung – durch nicht rechtzeitiges Verlassen der Maschine infolge Orientierungsschwierigkeiten um. Es wurde daher gefordert, die Flugzeuge zukünftig mit einer solchen Innenauskleidung auszurüsten, deren Verhalten bei einem Brand, Rauchentwicklung und Abspaltung toxischer Gase im Fall eines Brandes bestimmte Richtwerte nicht überschreiten. Diese Forderung wird aber nicht auf die Luftfahrtindustrie, die seit jeher besonders hohe Sicherheitsansprüche stellte, beschränkt bleiben, sondern sich auch auf andere vergleichbare Anwendungsbereiche, in denen sich der Einsatz von Kunststoffen zusehends verstärkte, übergreifen. Dies bedeutet, dass die bisher für diese Zwecke verwendeten Epoxidharze künftig nicht mehr eingesetzt werden können, da sie sowohl vom Verhalten bei einem Brand als auch von der Rauchentwicklung her die gestellten Forderungen nicht mehr erfüllen können. Die Verwendung ungesättigter Polyesterharze sowie halogenhaltiger Flammschutzmittel scheidet aus den gleichen Gründen aus. Phenol-Formaldehydharze sind dagegen wesentlich schwerer entflammbar als die vorgenannten Duroplaste. Sie entwickeln unter Brandbedingungen nur wenig Rauch, wobei im Rauchgas hauptsächlich Kohlenmonoxyd als toxische Substanz vorkommt, da Verbindungen, die andere giftige Gase entwickeln, nicht vorhanden sind. Für eine beabsichtigte Verwendung von Phenolharzen anstelle von Epoxylharzen als Verklebungsmittel darf jedoch die bekannte Sprödigkeit der Phenolharze nicht unberücksichtigt bleiben, da bei diesem Einsatz bei der Herstellung der beschriebenen Sandwichbauteile, nachstehend Kernverbundmaterialien genannt, die Verbindungen, d.h. die Klebefuge zwischen Deckschicht und dem meist aus wabenförmigem Material bestehenden Kern (Kernmaterial), schlag- und stossempfindlich und nicht biegefest sind. Phenolharze konnten aus diesen Gründen bisher nicht mit einem befriedigenden Ergebnis eingesetzt werden.

In der US-A-4 255 485 wird eine wässrige Mischung beschrieben, die für das Aufbringen auf Glasfasern geeignet ist, um diese zu einer Matte zu verbinden. Die Mischung enthält ein Phenol-Formaldehyd-Harnstoffkondensat, Stärke, ein emulgiertes thermoplastisches Harz, eine dimere Säure und ein emulgiertes Öl. Abgesehen davon, dass die Zusammensetzung gemäss der Entgegenhaltung weitere zwingende Bestandteile enthält, die in der erfindungsgemässen Mischung nicht enthalten sind, ist die härtbare Harzkomponente ein Phenol-Formaldehydharz, das mit Harnstoff modifiziert ist. Im Brandfall würde es zu einem beträchtlichen Anteil an toxischen Bestandteilen (z.B. HCN) im Rauchgas beitragen.

Die US-A-3 843 576 beschreibt wässrige Überzugsmischungen von Ethylen-/Acrylsäure-Copolymerisaten und Phenolharzen, wobei ein Teil oder die Gesamtmenge des Ethylen-/Acrylsäure-Copolymerisats ausgetauscht werden kann, z.B. durch Ethylen-/Vinylacetat. Es wird z.B. ein Terpolymer beschrieben, bei dem 20 bis 80% des Ethylen-/Acrylsäure-Copolymerisats durch Ethylen-/Vinylacetat ersetzt worden ist und das als Kleber vibrationsdämpfende Eigenschaften besitzen soll. Darüberhinaus wird in den Beispielen ausserdem noch Kohle-Teer-Pech angegeben. Die in der Entgegenhaltung eingesetzten Phenol-Formaldehydharze sind ferner nicht näher spezifiziert.

Aus der US-A-2 219 447 ist die Herstellung von Laminaten mit duroplastischem Kern und flexiblen Aussenschichten bekannt, wobei das Kernmaterial überwiegend nur mit Phenolharz imprägniert wird und die Aussenschichten bevorzugt ein Vinylharz aus 70 bis 95% Vinylchlorid und 5 bis 30% Vinylacetat enthalten. Das Phenolharz ist nicht näher definiert. Die Haftung zwischen dem Phenol- und dem Vinylharz wird dadurch erreicht, dass das Phenolharz vor der Aufbringung des Vinylharzes nur bis zum B-Zustand vorkondensiert wird.

In der US-A-2 902 458 wird eine Bindemittelkombination aus Phenolharz und einer Kunststoffdispersion wie Polyvinylacetat, Polystyrol oder Copolymerisaten von Styrol beschrieben. Ethylen-Vinylacetatpolymere werden nicht erwähnt. Die Bindemittelkombination dient als Kleber mit erhöhter Scherfestigkeit, insbesondere für Holz. Das Bindemittel wird mit einer Säure gemischt, die als Härter bei erhöhten Temperaturen wirkt. Die Phenolaldehydharze befinden sich im A-Zustand.

Ein Hinweis zur Herstellung von Verbundmaterial, das sich aufgrund seines günstigen brandtechnischen Verhaltens z.B. zum Innenausbau von beweglichen Transportmitteln eignet, ist in den Entgegenhaltungen nicht zu finden.

Als Bewertungsgrundlage derartiger Kernverbundmaterialien dient neben der Biegefestigkeit insbesondere die Trommelschälfestigkeit oder Schälkraft F (DIN 53 295), die in den «Werkstoff-Leistungsblättern» 8.4360 und 8.4361, Ausgabe November 1978 mit Werten von 20 bis 40 N für ein Kernverbund aus mit Phenolharz vorimprägniertem Filamentgewebe aus Glasfasern und Wabeneinlage angegeben ist. Nach dem Werkstoff-Leistungsblatt 5.3600, Ausgabe Dezember 1971 muss das eingesetzte Phenol-Formaldehydharz bestimmte Kenndaten und Eigenschaften aufweisen (z.B. Dichte (20 °C) 1,167 ± 0,02 Viskosität (20 °C) 150–250 mpa · s). Im Gegensatz zu den genannten Schälkraft-Werten der Phenol-Formaldehydharze betragen diejenigen bei Einsatz von Epoxydharz im allgemeinen 100–200 N.

Es war daher erwünscht, die Schälkraft von Kernverbundmaterialien, die unter Einsatz von Phenol-Formaldehydharzen hergestellt worden sind, zu erhöhen, um sie zumindest den Werten für die bisher verwendeten Epoxidharze anzugleichen.

Diese Aufgabe wird durch das in Anspruch 1 angeführte Verfahren gelöst.

Die Herstellung derartiger Kernverbundmaterialien erfolgt nach üblichen Methoden, wobei insbesondere von der Flugzeugindustrie folgender Aufbau gefordert wird und einzuhalten ist: Die Grund- bzw. Deckschichten, bestehend aus je mindestens zwei Lagen vorimprägnierter Glasfilamentgewebe gleichen oder vorzugsweise verschiedenen Quadratmetergewichts – im folgenden «Prepreg» genannt – sind mit einer Lage des Kernmaterials verbunden. Beispielsweise werden Glasfilamentgewebe mit einem Quadratmetergewicht von 80–400 g, vorzugsweise 100–300 g eingesetzt, wobei das dem Kernmaterial zugewandte Gewebe stets dasjenige mit dem gegebenenfalls grösseren Quadratmetergewicht ist.

Ausser Glasfilamentgewebe können auch andere Materialien eingesetzt werden, sofern sie den brandtechnischen Anforderungen entsprechen, z.B. Fasermatten oder Gewebe aus anorganischen Materialien, z.B. Steinwolle.

Die genannten Prepregs enthalten in Verarbeitungszustand einen bestimmten Anteil an Harzmasse, im allgemeinen 30–60, vorzugsweise 35–55, insbesondere 37–50% und sind ohne weitere Zusätze durch Wärme unter Druck härtbar. Unter % werden hier und im folgenden stets Gew.-% verstanden.

Das Kernmaterial kann aus verschiedenen Rohstoffen aufgebaut sein, z.B. Cellulose, Metall und/oder Kunststoff, die vorzugsweise mit dafür üblichen Phenolharzen imprägniert sind. Besonders kommt jedoch Poly-(terephthalarylamid) z.B. auf Basis von Terephthalsäurechlorid und p-Phenylendiamin in Frage, welches das vorteilhafteste brandtechnische Verhalten besitzt, verbunden mit geringem Gewicht und hoher Flexibilität. Beispielsweise besitzt das Kernmaterial eine besondere hexagonale Wabenstruktur, das mit einem Phenol-Formaldehydharz imprägniert und gehärtet wurde und den Werkstoff-Leistungsblättern 5.3650 und 5.3652 entspricht. Vorzugsweise werden wabenförmige Kennmaterialien, z.B. mit einer Rohdichte von 24–96 kg/m² und einer Zellweite von 3,0 bis 6,4 mm für Strukturbauteile verwendet.

Das Phenol-Formaldehydharz ist ein niedermolekulares, wärmehärtbares Resol, hergestellt aus mindestens einem einwertigen Phenol und Formaldehyd im Molverhältnis von 1 : (1,3–2,0) vorzugsweise 1 : (1,5–1,7). Als Phenole können Alkylphenole mit 1 bis 4 C-Atomen in der (den) Steitenkette(n), Aryl- und Aralkylphenole, wie o-, m- oder p-Kresol, die verschiedenen Xylenole, tert.-Butylphenol, Phenylphenol, styrolisierte Phenole, vorzugsweise aber Phenol, $C_6H_5OH$, allein oder in Mischung eingesetzt werden. Es ist auch möglich, zur Erhöhung der Reaktionsfreudigkeit einen kleinen Anteil von mehrwertigen Phenolen, wie Resorcin, Hydrochinon oder Bisphenol A mit zu verwenden. Ihr Anteil sollte im allgemeinen aber auf unter 20, vorzugsweise unter 10 Mol-%, bezogen auf einwertiges Phenol beschränkt bleiben.

Das Copolymerisat, das in Form einer in der Wärme selbstvernetzenden Dispersion mit dem Phenol-Formaldehydharz vermischt wird, basiert auf den Komponenten Vinylacetat und Äthylen im Verhältnis 1 : (0,4–0,7), vorzugsweise 1 : (0,5–0,6). Durch den Einbau von Monomeren mit funktionellen Gruppen wie Carboxyl- und/oder Methylolgruppen sind diese Copolymerisate selbstvernetzend. Die Konzentration der Dispersion beträgt 30 bis 60, vorzugsweise 40 bis 55%, bezogen auf den Feststoffanteil. Das Mischungsverhältnis von Phenol-Formaldehydharz zu dem Vinylacetat-Äthylencopolymerisat beträgt im allgemeinen (60 bis 90) : (10 bis 40), vorzugsweise (70 bis 80) : (20 bis 30) Gew.-%, jeweils gerechnet auf den Feststoffgehalt der Komponenten. Beide Komponenten sind gut mischbar. Bis zu einem Feststoffanteil von etwa 20 Gew.-% des Polymerisats in dem Phenol-Formaldehydharz ergeben sich blanke Harzlösungen. Bei einem höheren Anteil werden trübe und thixotrope Harzgemische erhalten, deren Eigenschaften durch die Trübung jedoch nicht verändert werden. Durch Zusatz von ein- und/oder mehrwertigen Alkoholen wie Methanol, Äthanol, Butanol sowie Äthylenglykolmonomethyl- bzw. äthyläther zu den Mischungen kann die Mischbarkeit verbessert werden. Unabhängig von dem äusseren Erscheinungsbild der Harzlösungen liegen jedoch in jedem Falle die beiden Mischungskomponenten getrennt nebeneinander vor, was unter dem Mikroskop erkennbar ist.

Durch den Zusatz der Kunststoffdispersion wird die Fliessneigung des Phenol-Formaldehydharzes während des Härtungsprozesses wesentlich verringert, so dass ein Ablaufen des Harzes vermieden wird. Durch geeignete Massnahmen, beispielsweise durch einseitige Beschichtung eines undurchlässigen Glasfaserfilaments oder durch zusätzliches Auflaminieren von saugfähigen Vliesstoffen auf die dem Kernmaterial zugewandte Seite, lässt sich eine Anreicherung des Bindemittels gerade an der Klebefuge erreichen. Durch den hohen Anteil des Bindemittels an der Klebefuge wird die Festigkeit des Kernverbundmaterials deutlich erhöht.

Die Prepregs aus dem Glasfilamentgewebe weisen den zuvor genannten Harzgehalt auf. Im allgemeinen wird zuerst eine Mischung aus dem Phenol-Formaldehydharz und der Kunststoffdispersion, die mit Lösungsmitteln verdünnt werden kann, auf das Glasfilamentgewebe aufgebracht. Dieses kann durch Tauchen in Form einer Tränkung geschehen, weiterhin kann das Harz zuerst von einem Vlies aus synthetischen Fasern aufgenommen werden und auf das Filamentgewebe aufgelegt werden oder es wird, speziell bei Geweben mit hohem Quadratmetergewicht, die nur eine mässige Durchtränkung gestatten, einseitig aufgetragen. Nach dem Trocknen bei erhöhter Temperatur, wobei die flüchtigen Bestandteile z.B. Wasser und organische Lösungsmittel der Tränklösung entfernt werden, das Bindemittel selbst jedoch nicht auskondensiert, wird das abgekühlte, meist klebrige Prepreg gewöhnlich zwischen Polyäthylenfolien bis zur Verwendung gelagert.

Die einzelnen tragenden Bestandteile der Kernverbundmaterialien werden in der einzusetzenden Reihenfolge geordnet und in einer beheizten Etagenpresse bei Temperaturen von 130–180°, vorzugsweise 140 bis 160 °C, meistens unter einem Pressdruck von 0,5 bis 3 bar, vorzugsweise 1,5 bis 2,5 bar verpresst.

Erfindungsgemäss lassen sich solche Kernverbundmaterialien erzielen, die die von der Flugzeugindustrie für derartige Produkte geforderten Eigenschaften aufweisen und zwar:

1.) Schälkraft mindestens 100 N (gemessen nach DIN 53 295, Trommel-Schälversuch),

2.) Biegefestigkeit mindestens 120 N/mm² (gemessen nach DIN 53 293, Vierpunkt-Biegeversuch),

3.) Rauchdichte nach 90 Sekunden maximal 100, nach 240 Sekunden maximal 200 (gemessen in NBS-Kammer nach NBS 708),

4.) Einhaltung der in der ATS-1000.001 (Airbus Industrie, Technical Specification, 2. Ausgabe, Mai 1979) angegeben akzeptierbaren maximalen Konzentrationen bezüglich der Rauchdichte (s. vorstehend) und der Anteile an giftigen Gasen bei der Verschwelung nach bestimmten Zeiteinheiten. Diese Konzentrationen sind in der nachfolgenden Tabelle aufgeführt:

Tabelle 1

| Giftige Gase | ppm nach 1,5 Min. | ppm nach 4 Min. |
|---|---|---|
| HF | 30 | 30 |
| HCl | 50 | 500 |
| HCN | 100 | 150 |
| $SO_2$ | 50 | 100 |
| CO | 3000 | 3500 |
| Nitrose Gase | 50 | 100 |

Zum Vergleich gegen diese Werte werden in der Tabelle 2 noch akzeptierbare Messwerte von den in Tabelle 1 genannten giftigen Gasen angegeben, die aus Laminaten bzw. Verbundstoffen abgegeben werden, die mit handelsüblichen, gängigen Epoxyd- und Phenolharzen und üblichen Zusatzstoffen hergestellt worden sind (s. «Kunststoffberater» 9 (1979) S. 488–496).

Tabelle 2

| Nr. | giftiges Gas | | | | | | | | | | | |
|---|---|---|---|---|---|---|---|---|---|---|---|---|
| | HF | | HCl | | HCN | | $SO_2$ | | CO | | Nitrose Gase | |
| Minuten | 1.5 | 4 | 1.5 | 4 | 1.5 | 4 | 1.5 | 4 | 1.5 | 4 | 1.5 | 4 |
| 1 Epoxid-Laminat | 30 | 30 | 20 | 30 | 6 | 8 | 13 | 15 | 1000 | 1000 | 14 | 11 |
| 2 Phenol-Laminat | 0 | 0 | 0 | – | 0 | 0 | 10 | 10 | 0 | 0 | 0 | 0 |
| 3 Epoxid-Sandwich | – | – | 8 | 8 | 9 | 15 | 15 | 15 | 350 | 500 | 12 | 10 |
| 4 Phenol-Sandwich | 0 | 0 | 0 | 0 | 1 | 1 | 10 | 10 | 100 | 175 | 8 | 8 |

Die genannten Forderungen bezüglich der akzeptierbaren maximalen Konzentrationen der giftigen Gase werden durch die erfindungsgemässen Kombinationen erfüllt.

Die erfindungsgemässen Verbundmaterialien eignen sich als Bauteile überall dort, wo es auf ein leichtes Gewicht bei gleichzeitiger Stabilität und hohen Flammenschutzwerten ankommt, z.B. vorzugsweise wie am Anfang erwähnt, zum Innenausbau von beweglichen Transportmitteln.

In den nachfolgenden Beispielen bedeutet T stets Gewichtsteile. Als Phenolharzkomponente wurde ein alkalisch kondensiertes Phenol-Formaldehydharz im Molverhältnis von Phenol:Formaldehyd von 1:1,6 als ca. 65%ige wässrige Lösung eingesetzt, das eine Viskosität von 150–250 mPa · s/20 °C (DIN 53 015) besass. Die Kunststoffdispersion war eine 50%ige wässrige Lösung eines Copolymerisats auf Basis Vinylacetat und Äthylen im Verhältnis 1:0,53 mit Säurezahl (SZ) 2,2 und der Viskosität 50–150 mPa · s/ 23 °C (Brookfield, 20 Upm).

Als Glasfilamentgewebe diente ein Gewebe von 0,16 mm Stärke in Kreuzköperbindung, einem Gewicht von 106 g/m² und einer Reisskraft von 250 N/cm in der Kette und 240 N/cm im Schuss (Gewebe I) sowie ein Gewebe in Atlasbindung mit einem Gewicht von 291 g/m², einer Stärke von 0,4 mm und einer Reisskraft von 600 in Kette und 580 in Schuss (Gewebe II).

Beispiele

1. 400 T Phenol-Formaldehydharz wurden mit 130 T der Copolymerisatdispersion durch Rühren vermischt und mit 120 T Äthanol verdünnt. Die Mischung ist praktisch blank. Die Gewebe I und II wurden mit dieser Harzlösung getränkt und überschüssiges Harz durch Abstreifen entfernt. Anschliessend wurden die Gewebe für 10 Minuten bei 90 °C getrocknet und ein Gewebe I-Prepreg mit 54% und ein Gewebe II-Prepreg mit 45% Harzgehalt erhalten. Diese Prepregs wurden zwischen Polyäthylenfolien gelagert.

2. 400 T Phenol-Formaldehydharz wurden mit 222 T der Copolymerisatdispersion durch Rühren vermischt und mit 120 T Äthanol verdünnt. Die Mischung ist stark trübe und thiotrop. Der Harzauftrag erfolgt wie bei Beispiel 1; Harzgehalt Gewebe I 50%, Gewebe II 55%.

Vergleichsbeispiel 1

400 T Phenol-Formaldehydharz wurden mit 72 T Äthanol verdünnt. Ein Abschnitt des Gewebes II von 32 × 35 cm wurde durch Tauchen mit dieser Harzlösung getränkt. Nach 5-minütigem Abtropfen der überschüssigen Lösung wurde das Gewebe 10 Minuten bei 90 °C getrocknet. Das erhaltene Prepreg hatte einen Harzgehalt von 55%.

Die genannte Harzlösung wurde mit weiteren 268 T Äthanol versetzt und in dieser Lösung ein Gewebstück des Gewebes I mit den gleichen Abmessungen getränkt und gehandelt. Das erhaltene Prepreg besass einen Harzgehalt von 45%.

Vergleichsbeispiel 2

Beispiel 1 wurde wiederholt, jedoch mit dem Unterschied, dass anstelle der Copolymerisatdispersion eine handelsübliche, feindisperse Polyvinylacetatdispersion (ca. 53% Feststoffanteil, Viskosität/Brookfield, 20 Upm/23 °C 20–50 mPa · s, SZ < 2) und anstelle des Äthanols 150 T Aceton wegen seiner besseren Verträglichkeit mit dieser Mischung eingesetzt wurden. Harzgehalt: Prepreg aus Gewebe I 52, Gewebe II 48%.

3. 100 T der in Beispiel 2 hergestellten Harzmischung wurden gleichmässig auf einer Polyäthylenfolie über eine Fläche von 32 × 35 cm verteilt. In diese Harzschicht wurde ein Spunbond-Vlies aus Polyäthylenterephthalatfasern mit einem Flächengewicht von 40 g/m² eingedrückt und eine Lage des Gewebes I auf das Vlies auflaminiert, wobei gleichzeitig eine Durchtränkung mit dem Bindemittel stattfand. Trocknung und Lagerung des Prepregs wie in Beispiel 2.

4. Die in Beispiel 2 hergestellte Harzlösung wurde auf einer Seite des Gewebes II aufgerakelt. Nach der Trocknung für 10 Minuten bei 90 °C wurde ein an der harzreichen Seite stark klebriges Gewebe erhalten. Das Gewebe selbst war nur schwach durchtränkt.

Herstellung der Kernverbundmaterialien

Die nach den Beispielen 1 und 2 sowie den Vergleichsbeispielen hergestellten getränkten Harzmatten der Gewebe I und II wurden in der Reihenfolge Gewebe I/Gewebe II/Kernmaterial/Gewebe II/Gewebe I geordnet und in einer beheizten Etagenpresse zwischen Pressblechen für 1 Stunde bei 150 °C bei dem in Tabelle 3 angegebenen spezifischen Pressdruck verpresst. Das Kernmaterial bestand aus sog. «Nomex»®-Waben aus einem Polyterephthalarylamid mit folgenden Eigenschaften: Rohdichte 29 kg/m³, Zellweite 3,2 mm, Druckfestigkeit 0,32 N/mm². Ähnliche Kernverbundmaterialien wurden mit den Gewebestücken der Beispiele 3 und 4 hergestellt, wobei jeweils als Gewebe I in der oben angegebenen Reihenfolge das Prepreg des Beispiels 2 verwendet wurde. Die Vliesseite des Prepregs aus Beispiel 3 bzw. die harzreiche Seite des Gewebes aus Beispiel 4 wurden jeweils zur Wabe hin angeordnet. Mit den Prepregs aus Beispiel 2 wurden ausserdem verschiedene Verbundmaterialien gefertigt, wobei die Wabendicke des Kernmaterials sowie der spezifische Pressdruck variiert wurden. Prüfkörper aus den erhaltenen Verbundmaterialien wurden für die Bestimmung der Trommelschälfestigkeit (DIN 53 295) und Biegefestigkeit (DIN 53 293-Entwurf) hergestellt. Die Resultate sind in der Tabelle 3 zusammengefasst.

Tabelle 3

| Harzmassen aus Beispiel | spez. Pressdruck [bar] | Wabendicke [mm] | Harzgehalt im Verbundmaterial [%] | Trommelschälfestigkeit [N] | Biegefestigkeit (4-Punkt-Biegung) N/mm² |
|---|---|---|---|---|---|
| 1 | 1,5 | 24,4 | 46 | 90 | – |
| 2 | 1,5 | 24,4 | 51 | 130 | – |
| 2 | 1,5 | 9,4 | 51 | 104 | 144 |
| 2 | 2,5 | 9,4 | 51 | 130 | 149 |
| Vergleich 1 | 1,5 | 24,4 | 49 | 35 | ca. 140 |
| Vergleich 2 | 1,5 | 9,4 | ca. 50 | 33 | – |
| 3 | 1,5 | 9,4 | ca. 55 | 183 | – |
| 4 | 1,5 | 9,4 | 51 | 180 | 121 |

Aus der Tabelle 3 geht hervor, dass durch den Zusatz des Vinylacetat/Äthylen-Copolymerisats zu der Lösung eines Phenol-Formaldehydharzes eine Steigerung der Schälfestigkeitswerte bewirkt wird. Durch eine Erhöhung der Bindemittelmenge an der Klebefuge zwischen den Waben und der Grund- bzw. Deckschicht erhöht sich dieser Wert weiter, das durch die Ergebnisse der Beispiele 3 und 4 deutlich belegt wird. Die Biegefestigkeit ist bei Einsatz von normal harzgetränkten Gewebeschichten bei Einsatz der Copolymerisat-Dispersion gegenüber dem Nullwert erhöht, sie sinkt geringfügig bei der Anreicherung des Bindemittels an der Klebefuge, jedoch nicht unter den in der Forderung der Flugzeugindustrie angegebenen Wert. Die tolerierbare Verminderung der Biegestigkeit der Verbundmaterialien ist darauf zurückzuführen, dass die Klebefuge infolge des erhöhten Harzgehaltes nicht mehr so elastisch ist und daher bei Biegebeanspruchung leichter reisst. Die Vorteile der nach dem erfindungsgemässen Verfahren hergestellten Verbundmaterialien wiegen jedoch diesen Nachteil auf. Wichtig ist aber vor allem, dass durch den Einsatz einer Kombination aus Phenol-Formaldehydharz und Vinylacetat/Äthylen-Copolymerisat neben der Erhöhung der Schälfestigkeit auch die Forderungen nach einer bestimmten Rauchdichte nach der Verschwelung eingehalten werden bzw. die Einhaltung der bei der Verschwelung entstehenden maximalen Konzentration an toxischen Gasen erreicht wird.

**Patentansprüche**

1. Verfahren zur Herstellung von Verbundmaterialien aus – vorzugsweise mit Phenol-Formaldehydharz imprägnierten – Kernmaterialien und Fasergeweben, insbesondere Glasfilamentgeweben mit erhöhter Trommelschälfestigkeit durch Aufbringen einer Mischung aus einem wärmehärtbaren Phenol-Formaldehydharz und einer Kunststoff-Dispersion auf mindestens ein Fasergewebe, Bildung eines Schichtverbandes und anschliessende Härtung unter Druck bei erhöhter Temperatur, dadurch gekennzeichnet, dass

A) eine Bindemittel-Mischung a) aus $a_1$) 60 bis 90 Gew.-% eines Resols aus mindestens einem einwertigen Phenol und Formaldehyd im Molverhältnis von 1 : (1,3–2,0) und $a_2$) 10 bis 40 Gew.-% eines in der Wärme selbstvernetzenden Copolymerisats auf Basis Vinylacetat und Äthylen im Gewichtsverhältnis 1 : (0,4–0,7) in Form einer 30–60 Gew.-%igen Dispersion, wobei die Prozentangaben jeweils auf den Feststoffgehalt der Komponenten gerechnet sind, als Bindemittel auf Fasergewebe aufgebracht,

B) von Wasser und organischen Lösungsmitteln überwiegend befreit wird,

C) anschliessend mit einem Kernmaterial zu einem Verbundmaterial geformt und

D) dieses bei 130 bis 180 °C ausgehärtet wird.

2. Verfahren nach Anspruch 1, dadurch gekennzeichnet, dass 70 bis 80 Gew.-% eines Phenol-Resols mit einem Phenol-Formaldehyd-Molverhältnis 1 : (1,5–1,7) und 20 bis 30 Gew.-% der Dispersion eines Copolymerisats aus Vinylacetat und Äthylen im Gewichtsverhältnis 1 : (0,5–0,6) eingesetzt werden.

3. Verfahren nach Anspruch 1 oder 2, dadurch gekennzeichnet, dass das Bindemittel nur einseitig auf das Fasergewebe aufgebracht wird.

4. Verfahren nach Anspruch 1 oder 2, dadurch gekennzeichnet, dass das Fasergewebe zusätzlich mit einem Vlies aus Polyäthylenterephtalatfasern laminiert und diese Seite mit dem Kernmaterial verbunden wird.

5. Verfahren nach einem oder mehreren der Ansprüche 1 bis 4, dadurch gekennzeichnet, dass die einzelnen Lagen des Schichtverbandes in der Reihenfolge: mindestens zwei mit der Bindemittel-Mischung a) versehene Gewebe/Kernmaterial/mindestens zwei mit der Mischung a) versehene Gewebe verbunden werden.

6. Verfahren nach einem oder mehreren der Ansprüche 1 bis 5, dadurch gekennzeichnet, dass als Gewebe Glasfasergewebe verarbeitet wird.

7. Verfahren nach einem oder mehreren der Ansprüche 1 bis 6, dadurch gekennzeichnet, dass eine solche Menge der Bindemittelmischung a) auf das Fasergewebe aufgebracht wird, dass der Harzgehalt 30–60, vorzugsweise 35–55, insbesondere 37–50 Gew.-% beträgt.

8. Verfahren nach einem oder mehreren der Ansprüche 1 bis 7, dadurch gekennzeichnet, dass die Härtungsbedingungen 140 bis 160 °C bei einem Druck von 0,5–3, vorzugsweise 1,5–2,5 bar betragen.

9. Verbundmaterial, auf Basis von – vorzugsweise mit Phenol-Formaldehydharz imprägnierten – Kernmaterialien und Fasergeweben, dadurch gekennzeichnet, dass es als Bindemittel eine Mischung aus 60 bis 90 Gew.-% eines wärmehärtbaren Phenol-Formaldehydharzes im Molverhältnis 1 : (1,3–2,0) und 10 bis 40 Gew.-% einer in der Wärme selbst vernetzenden Kunststoff-Dispersion aus einem Copolymerisat auf Basis Vinylacetat und Äthylen im Verhältnis 1 : (0,4–0,7) enthält.

10. Verbundmaterial nach Anspruch 9, dadurch gekennzeichnet, dass es folgende Eigenschaften aufweist:

1.) Schälkraft mindestens 100 N (gemessen nach DIN 53 295, Trommel-Schälversuch),

2.) Biegefestigkeit mindestens 120 N/mm² (gemessen nach DIN 53 293, Vierpunkt-Biegeversuch),

3.) Rauchdichte nach 90 Sekunden maximal 100, nach 240 Sekunden maximal 200 (gemessen in NBS-Kammer nach NBS 708),

4.) Einhaltung der maximalen Konzentrationen (ppm) an giftigen Gasen bei der Verschwelung nach 4 Minuten.

**Revendications**

1. Procédé de fabrication de matériaux composites à haute résistance au décollement, à partir de matériaux devant constituer l'âme et de tissus de fibres – de préférence imprégnés d'une résine phénol-formaldéhyde –, plus particulièrement de tissus en filaments de verre, par application d'un mélange constitué d'une résine phénol-formaldéhyde thermodurcissable et d'une dispersion de matière plastique sur au moins un tissu de fibres, formation d'un assemblage de strates, puis durcissement sous pression à température élevée, procédé caractérisé en ce que:

A) on applique sur le tissu de fibres, comme liant, un mélange a) constitué $a_1$) de 60 à 90% en poids d'un résol dérivant d'au moins un monophénol et de formaldéhyde dans un rapport molaire de 1 : (1,3–2,0) et $a_2$) de 10 à 40% en poids d'un copolymère à base d'acétate de vinyle et d'éthylène capable de s'auto-réticuler à chaud, dans un rapport pondéral de 1 : (0,4–0,7), sous la forme d'une dispersion dont la concentration peut aller de 30 à 60% en poids (les pourcentages indiqués sont relatifs à l'extrait sec des composantes),

B) on élimine la majeure partie de l'eau et des solvants organiques,

C) puis on moule avec un matériau devant former l'âme de manière à fabriquer un matériau composite et

D) on durcit celui-ci à une température de 130 à 180 °C.

2. Procédé selon la revendication 1 caractérisé en ce qu'on utilise de 70 à 80% en poids d'un résol phénolique dans lequel le rapport entre le phénol et le formaldéhyde est de 1 : (1,5–1,7), et de 20 à 30% en poids de la dispersion d'un copolymère d'acétate de vinyle et d'éthylène dans un rapport pondéral de 1 : (0,5–0,6).

3. Procédé selon l'une des revendications 1 et 2, caractérisé en ce qu'on n'applique le liant que d'un seul côté du tissu de fibres.

4. Procédé selon l'une des revendications 1 et 2, caractérisé en ce qu'on applique en outre sur le tissu de fibres, par stratification, un non-tissé fait de fibres de poly-(téréphtalate d'éthylène) et on unit ce côté au matériau devant constituer l'âme.

5. Procédé selon l'une quelconque des revendications 1 à 4, caractérisé en ce que les diverses couches de l'assemblage de strates sont unies dans l'ordre suivant: au moins deux tissus munis du mélange liant a)/matériau constituant l'âme/au moins deux tissus munis du mélange a).

6. Procédé selon l'une quelconque des revendications 1 à 5, caractérisé en ce qu'on utilise, comme tissu, un tissu de fibres de verre.

7. Procédé selon l'une quelconque des revendications 1 à 6, caractérisé en ce qu'on applique sur le tissu de fibres une quantité du mélange liant a) telle que la teneur en résine soit de 30 à 60% en poids, de préférence de 35 à 55 et plus particulièrement de 37 à 50.

8. Procédé selon l'une quelconque des revendications 1 à 7, caractérisé en ce que le durcissement est effectué à une température de 140 à 160 °C et sous une pression de 0,5 à 3 bar, de préférence de 1,5 à 2,5 bar.

9. Matériau composite comprenant une âme et des tissus de fibres (de préférence imprégnés d'une résine phénol-formaldéhyde), matériau caractérisé en ce qu'il contient, comme liant, un mélange constitué de 60 à 90% en poids d'une résine thermodurcissable à base de phénol et de formaldéhyde dans un rapport molaire de 1 : (1,3–2,0) et de 10 à 40% en poids d'une dispersion de matière plastique, auto-réticulable à chaud, d'un copolymère à base d'acétate de vinyle et d'éthylène dans un rapport de 1 : (0,4–0,7).

10. Matériau composite selon la revendication 9 caractérisé en ce qu'il a les propriétés suivantes:

1.) force de décollement d'au moins 100 N (mesurée selon la norme DIN 53 295, essai de pelage sur tambour),

2.) résistance à la flexion d'au moins 120 N/mm² (mesurée selon DIN 53 293, essai de flexion à 4 points),

3.) densité de la fumée: au plus 100 au bout de 90 secondes et au plus 200 au bout de 240 secondes (mesurée dans l'enceinte NBS d'après NBS 708),

4.) respect des concentrations maximales (ppm) en gaz toxiques lors de la carbonisation, au bout de 4 minutes.

**Claims**

1. Process for preparation of compounded material, preferably impregnated with phenole-formaldehyde resin of core materials and woven fabrics, especially woven glass filament fabrics, having an increased drum peeling strength by application of a mixture of a heat-curable phenole-formaldehyde resin and a dispersion of plastic material on at least one woven fabric, formation of a laminate and subsequently curing under pressure at elevated temperature, characterized in that

A) a binder mixture a) consisting of $a_1$) 60–90% by weight of a resole of at least one monovalent phenole and formaldehyde in a molar ratio of from 1 : (1.3–2.0) and $a_2$) 10 to 40% by weight of a copolymer, selflinking under elevated temperature, based on vinyl acetate and ethylene in a weight ratio of from 1 : (0.4–0.7) in the form of a dispersion of 30 to 60% by weight, percentages are based on the solids content of the components respectively, has been applied as binding composition to woven fabric,

B) has been predominantly freed from water and organic solvents,

C) has been subsequent formed with a core material to a compounded material and

D) curing this compounded material at temperatures of from 130 to 180 °C.

2. Process according to claim 1, characterized in that 70 to 80% by weight of a phenole resole, having a molar ratio of phenole to formaldehyde of from 1 : (1.5–1.7), and 20 to 30% by weight of a dispersion of a copolymer of vinyl acetate and ethylene in a weight ratio of from 1 : (0.5–0.6) have been used.

3. Process according to claim 1 or 2, characterized in that the binding composition has been applied only to one side of the woven fabric.

4. Process according to claim 1 or 2, characterized in that the woven fabric has been laminated additionally with a fleece of polyethyleneterephthalat fibers and that this side has been compounded with the core material.

5. Process according to one or more of the claims 1 to 4, characterized in that the single layers of the laminate are compounded in the sequence: at least two woven fabrics, supplied with the binding composition mixture a)/core material/at least two woven fabrics, supplied with the mixture a).

6. Process according to one or more of the claims 1 to 5, characterized in that glass fiber fabric has been used as woven fabric.

7. Process according to one or more of claims 1 to 6, characterized in that the binding composition a) has been applied to the woven fabric in such amount that the resin content is 30 to 60, preferably 35 to 55, particularly 37 to 50% by weight.

8. Process according to one or more of the claims 1 to 7, characterized in that the curing conditions are 140 to 160 °C at a pressure of from 0,5–3, preferably 1.5–2.5 bar.

9. Compounded material, based on core materials, preferably impregnated with phenole-formaldehyde resin, and woven fabrics, characterized in that it contains as binding composition a mixture of 60 to 90% by weight of a heatcurable phenole-formaldehyde resin in a molar ratio of from 1 : (1.3–2.0) and 10 to 40% by weight of a dispersion of plastic material, self-linking under elevated temperatures, of a copolymer based on vinyl acetate and ethylene in a ratio of from 1 : (0.4–0.7).

10. Compounded material according to claim 9, characterized in that it has the following properties:

1.) peeling strength at least 100 N (measured according to DIN 53 295 drum-peeling test),

2.) flexibility at least 120 N/mm$^2$ (measured according to DIN 53 293, four-point flexing test),

3.) smoke density after 90 seconds maximum value 100, after 240 seconds maximum value 200 (measured in a NBS-chamber according to NBS 708)

4.) adherance to a maximum concentration (ppm) of toxical gases at non-flamming exposure after four minutes.